# EUROPEAN PATENT APPLICATION

(11) **EP 2 799 964 A2**
(43) Date of publication of application: **05.11.2014**
(21) Application number: 14166305.4
(22) Date of filing: 29.04.2014
(51) Int. Cl.: G06F 3/042

(54) **Motion sensor and packaging method thereof**

(30) Priority: 29.04.2013 US 201361817306 P; 25.12.2013 CN 201310727571
(71) Applicant: Lite-On Semiconductor Corporation, New Taipei City 231 (TW)
(72) Inventor: Hsieh, Ming-Hsun, 829 Kaohsiung City (TW)
(74) Representative: Becker Kurig Straus

(57) **Abstract**

A motion sensor includes: a substrate, which includes a plurality of lead frame layers and a plurality of ceramic layers; a light source for emitting light which is infrared light, visible light or ultraviolet light, disposed on the substrate; a sensing device for receiving the light to perform motion sensing disposed on the substrate; a cover for fixing and protecting the light source and the sensing device; and an adhesive for adhering the cover to the substrate, the adhesive including a component capable of blocking the light.

## Description

### Field of the Invention

The present invention relates to a motion sensor and a packaging method thereof, and more particularly, to a motion sensor having a ceramic package structure and a packaging method thereof.

### Background of the Invention

With advancements in technology, modern computer systems can be used as video gaming and entertainment systems, whereas computer systems in the past only had simple functions such as word processing. The computer system has therefore become one of the most important devices in our modern society. To further improve the computer system's usefulness and functionality, technology to integrate input devices for interface control is also continuously being developed.

Many computer systems are equipped with diversified functions, and therefore require various sensing devices which can perform detection on peripheral environments, in order to perform corresponding applications. A motion sensor is capable of converting a movement of a user into a signal, to thereby allow an electronic device to control the movement of a cursor or pointer on a display screen. This function may be applied together with a graphical user interface on the display screen to select objects on the display screen and perform control functions accordingly, allowing the user to interact with the computer system via the device. Enhancing the stability and conductivity of the motion sensor has therefore become a target of the industry.

### Summary of the Invention

The present invention aims at providing a motion sensor and a packaging method thereof in order to solve the abovementioned problems.

This is achieved by a motion sensor and a packaging method according to claims 1 and 11. The dependent claims pertain to corresponding further developments and improvements.

As will be seen more clearly from the detailed description following below, the claimed motion sensor comprises a substrate, which includes a plurality of lead frame layers and a plurality of ceramic layers; a light source for emitting light, wherein the light is infrared light, visible light or ultraviolet light disposed on the substrate; a sensing device for receiving the light to perform motion sensing disposed on the substrate; a cover for fixing and protecting the light source and the sensing device; and an adhesive for adhering the cover to the substrate, including a component capable of blocking the light.

### Brief Description of the Drawings

FIG. 1 is a section diagram of a motion sensor according to an embodiment of the present invention.
FIG. 2, FIG. 3 and FIG. 4 are schematic diagrams illustrating a side view, top view and bottom view, respectively, of the motion sensor shown in FIG. 1.
FIG. 5 is a side view diagram of another motion sensor according to an embodiment of the present invention.
FIG. 6 and FIG. 7 are a side view and bottom view, respectively, of a motion sensor according to an embodiment of the present invention.
FIG. 8 is a schematic diagram of a plurality of motion sensors according to an embodiment of the present invention.
FIG. 9 is a schematic diagram of a packaging process according to an embodiment of the present invention.

### Detailed Description

Ceramics are widely used in semiconductor processes such as the ceramic substrate or ceramic packaging. They have several advantages including high mechanical strength, high isolation, large heat resistance, high chemical stability and strong circuit adhesive force. Due to their large heat resistance and high conductivity, the ceramic packaging is widely applied in light emitting diode (LED) processes. The present invention uses the ceramic packaging technology for motion sensors, in order to enhance the stability and conductivity thereof.

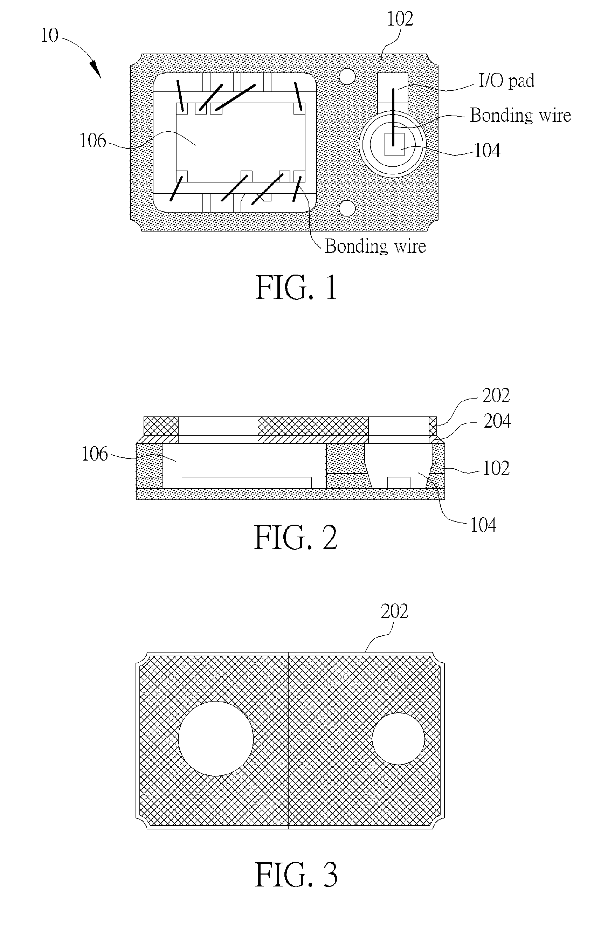

FIG. 1 is a section diagram of a motion sensor 10 according to an embodiment of the present invention. The motion sensor 10 includes a substrate 102, a light source 104 and a sensing device 106. The substrate 102 is composed of a plurality of lead frame layers and a plurality of ceramic layers. The light source 104, disposed on the substrate 102, is utilized for emitting light. The sensing device 106, also disposed on the substrate 102, is utilized for receiving light to perform motion sensing. The sensing device 106 is illustrated as a chip in FIG. 1, and is connected to I/O pads on the substrate 102 via bonding wires, to perform signal transmission. The sensing device 106 is mainly utilized for controlling the operations of the motion sensor 10, and may be disposed in the motion sensor 10 with a chip or in other forms, which are not limited to what is described herein. In an embodiment, the operations of the light source 104 are further driven by a driver. Similarly, the driver may also be realized in a chip and connected to the I/O pads on the substrate 102 via bonding wires, to perform signal transmission. All of the bonding wires and I/O pads used on the substrate 102 may be realized by conductive materials such as gold, copper or aluminum.

When the motion sensor 10 is in operation, the light source 104 may emit light, which is then reflected by external objects and subsequently received by the sensing device 106. With the difference in locations and shapes of the external objects, different reflection results will be obtained, which can then be used to detect movements and actions of the objects. FIG. 2, FIG. 3 and FIG. 4 are schematic diagrams illustrating a side view, top view and bottom view, respectively, of the motion sensor 10. As shown in FIG. 2, a side view of the substrate 102, the light source 104 and the sensing device 106 of the motion sensor 10 are illustrated. The substrate 102 is composed by overlapping a plurality of lead frame layers and a plurality of ceramic layers in an interleaved manner. In an embodiment, the substrate 102 includes N lead frame layers and N ceramic layers, where the first lead frame layer is laid as a bottom, the first ceramic layer is overlaid on this bottom, the second lead frame layer is laid on top, and then the second ceramic layer is laid on top of that. When the N^{th} lead frame layer is laid, the N^{th} ceramic layer is laid on top. These layers are then combined via thermo-compression.

In the motion sensor 10, a cover 202 is laid over the substrate 102. The cover 202, which is capable of fixing and protecting the light source 104 and the sensing device 106, may be composed of ceramics or ceramic compounds. The cover 202 includes two holes, which are respectively located over the light source 104 and the sensing device 106. A lens is disposed in each hole, wherein one lens provides a light emitting path for the light source 104 and protects the light source 104, and the other provides a light receiving path for the sensing device 106 and protects the sensing device 106.

It is notable that the cover 202 is adhered to and fixed on the substrate 102 via an adhesive 204, and the adhesive 204 should include a component capable of blocking the light emitted by the light source 104 and light with the same wavelength. The operations of the sensing device 106 performing object sensing are accomplished by detection of light; hence, the sensing device 106 is sensitive to any variations in ambient light. The adhesive 204 has to block the light leaking from the light source 104, in order to prevent this light from interfering with the sensing results of the sensing device 106. In this embodiment, the light emitted by the light source 104 may be of any wavelength and can therefore include infrared light, visible light or ultraviolet light, but is not limited to what is described herein. The lens located in the hole may be implemented by any material that can allow the light emitted by the light source 104 to pass, such as plastic. The lens has to be adhered over the light source 104 or the sensing device 106 via adhesives which are transparent to light, such as silicone, epoxy or ultraviolet curable adhesive.

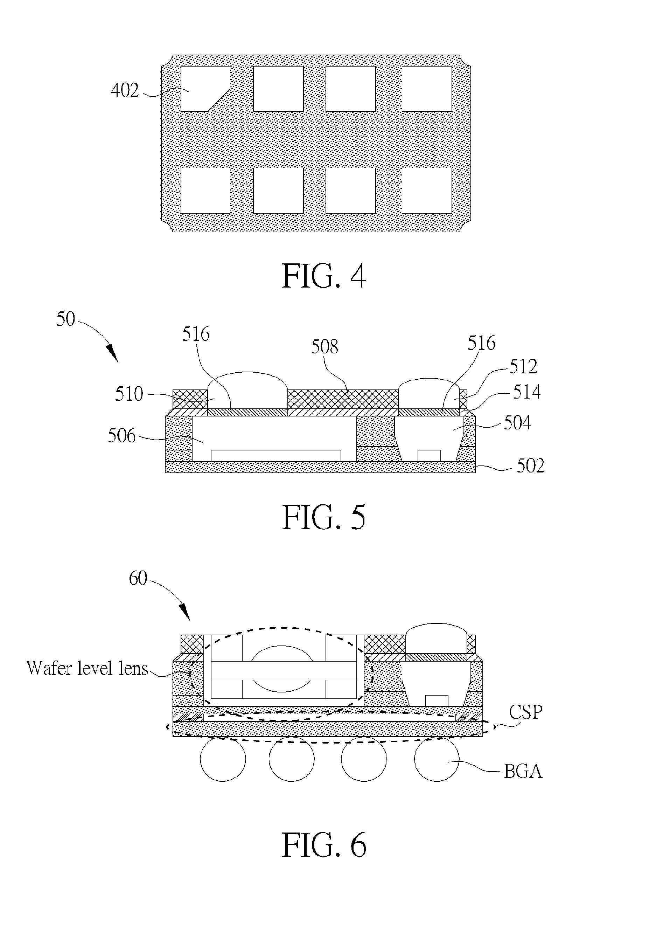

FIG. 4 illustrates a bottom view of the motion sensor 10. Pads 402 are spread in the bottom of the motion sensor 10, and may be connected to external devices such as a printed circuit board (PCB) for signal transmission.

In an embodiment, the lens may be inserted in the cover to form a complete cover by double injection molding, so it can be overlaid on the motion sensor. FIG. 5 is a side view diagram of another motion sensor 50 according to an embodiment of the present invention. The motion sensor 50 includes a substrate 502, a light source 504, a sensing device 506, a cover 508 and lenses 510, 512. The materials and components of the substrate 502, the light source 504 and the sensing device 506 are similar to those of the substrate 102, the light source 104 and the sensing device 106, respectively, and thus will not be detailed further herein. The cover 508 and the lenses 510, 512 are laid over the substrate 502 by double injection molding. The materials of the cover 508 may be ceramics or related compounds, which are adhered to the substrate 502 via an adhesive 514 capable of blocking the light emitted by the light source 504 and light of the same wavelength. The lenses 510 and 512 are adhered to the light source 504 and the sensing device 506 via an optically clear adhesive 516 that is able to pass light emitted by the light source 504.

It is notable that the present invention provides a motion sensor having a ceramic package structure and a packaging method thereof. Those skilled in the art can make modifications or alternations accordingly. For example, the packaging method of a motion sensor may be a ball grid array (BGA) packaging technology, or the chip scale package (CSP) technology may be incorporated in order to reduce package size. In the above embodiments the lenses are plastic lenses adhered to the light source or the sensing device, but in an embodiment, a wafer level lens may be applied for a sensing device, in order to reduce cost and enhance production efficiency.

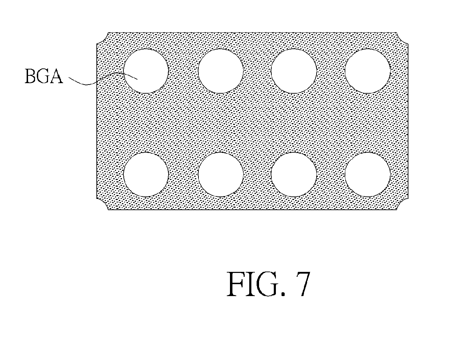

FIG. 6 and FIG. 7 are a side view and bottom view, respectively, of a motion sensor 60 according to an embodiment of the present invention. As shown in FIG. 6, the structure and element disposition of the motion sensor 60 are similar to the motion sensor 10. The main difference between the motion sensor 60 and the motion sensor 10 is that the motion sensor 60 uses a wafer level lens as the medium for the sensing device to receive light. CSP technology is applied in the motion sensor 60 and incorporated with the BGA package to achieve a smaller package area.

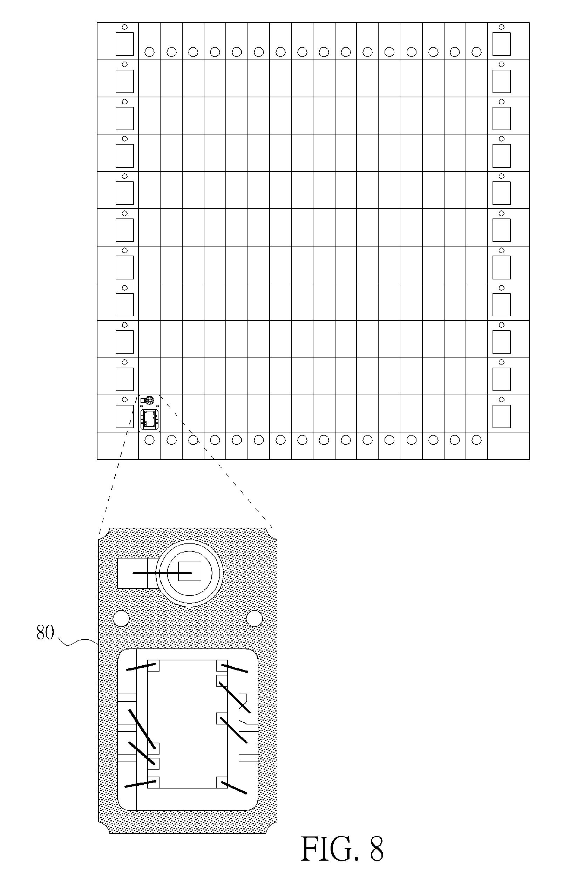

In the above embodiments, the structure and packaging method are all illustrated with a single motion sensor. In general, when manufacturing the package of the motion sensor, the manufacturer lays each layer of the packaging material individually. Multiple packages are manufactured simultaneously and segmented to each individual package. FIG. 8 is a schematic diagram of a plurality of motion sensors according to an embodiment of the present invention. When the motion sensor is packaged, the substrate is first constructed by laying a plurality of lead frame layers and a plurality of ceramic layers, and the light source and the sensing device are placed in the substrate individually. A layer of adhesive is then laid on the package, in order to fix and protect the light source and the sensing device. The package is finally covered by the cover and lenses. In FIG. 8, each grid is a system in package, which can be divided into a respective motion sensor 80.

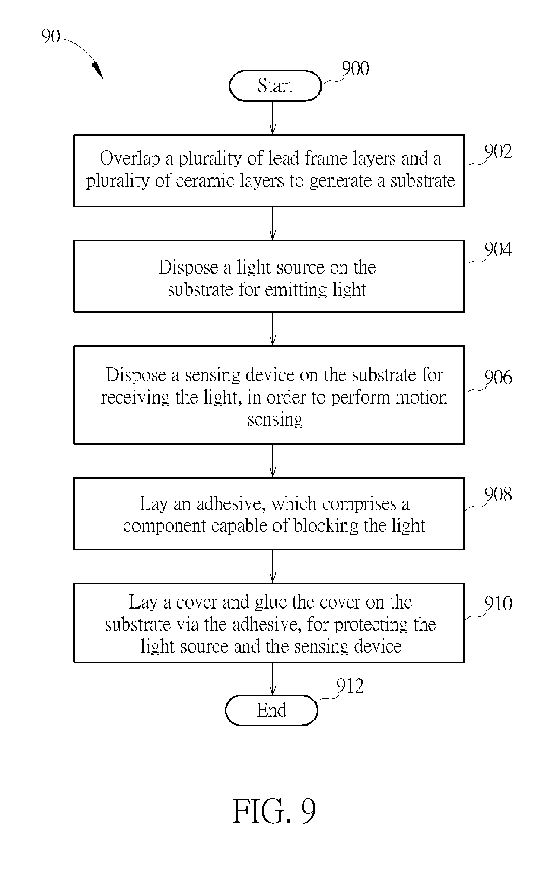

The abovementioned packaging method of the motion sensor can be summarized into a packaging process 90, which is shown in FIG. 9. The packaging process 90 includes the following steps:
- Step 900:: Start.
- Step 902:: Overlap a plurality of lead frame layers and a plurality of ceramic layers to generate a substrate.
- Step 904:: Dispose a light source on the substrate for emitting light.
- Step 906:: Dispose a sensing device on the substrate for receiving the light, in order to perform motion sensing.
- Step 908:: Lay an adhesive, which comprises a component capable of blocking the light.
- Step 910:: Lay a cover and adhere the cover on the substrate via the adhesive, for protecting the light source and the sensing device.
- Step 912:: End.

To sum up, the present invention provides a motion sensor having a ceramic package structure and a packaging method thereof, which can achieve high stability and conductivity. In some embodiments, double injection molding may be utilized for laying lenses and covers, which is further incorporated with package structures such as CSP and BGA package, in order to reduce package area and enhance manufacturing efficiency.

## Claims

1. A motion sensor (10), **characterized by** comprising:
a substrate (102) comprising a plurality of lead frame layers and a plurality of ceramic layers;
a light source (104) for emitting light which is infrared light, visible light or ultraviolet light disposed on the substrate (102);
a sensing device (106) for receiving the light to perform motion sensing disposed on the substrate (102);
a cover (202) for fixing and protecting the light source (104) and the sensing device (106); and
an adhesive (204) for adhering the cover (202) to the substrate (102), the adhesive (204) comprising a component capable of blocking the light.

2. The motion sensor (10) of claim 1, **characterized in that** the plurality of lead frame layers and the plurality of ceramic layers are overlapped in an interleaved manner.

3. The motion sensor (10) of claim 1, **characterized in that** the cover (202) is a ceramic compound overlaid on the substrate (102) and comprising a hole over the light source (104) and the sensing device (106) in order to allow the light to pass.

4. The motion sensor (10) of claim 1, **characterized in that** the cover (202) is overlaid on the substrate (102) by double injection molding.

5. The motion sensor (10) of claim 1, **characterized in that** the cover (202) comprises:
a ceramic compound overlaid on the substrate (102);
a lens placed over the light source (104) so as to protect the light source (104) and allow the light to pass; and
another lens placed over the sensing device (106) so as to protect the sensing device (106) and allow the light to pass.

6. The motion sensor (10) of claim 5, **characterized in that** the lens is a plastic lens.

7. The motion sensor (10) of claim 5 or 6, **characterized in that** the other lens is a plastic lens or a wafer level lens.

8. The motion sensor (10) of any of claims 5-7, **characterized in that** the lens and the other lens are adhered to the light source (104) and the sensing device (106) respectively, via a silicone, an epoxy or an ultraviolet curable adhesive.

9. The motion sensor (10) of any of claims 1-8, **characterized in that** the motion sensor (10) further comprises a driver for driving operations of the light source (104).

10. The motion sensor (10) of any of claims 1-9, **characterized in that** the sensing device (106) is realized in a chip, and the chip is disposed on the substrate (102) via a chip scale package.

11. A packaging method for preparing a motion sensor (10) according to any of claims 1-10.
